# EUROPÄISCHE PATENTSCHRIFT

(11) **EP 2 670 042 B1**
(45) Veröffentlichungstag und Bekanntmachung des Hinweises auf die Patenterteilung: **04.10.2017**
(21) Anmeldenummer: 13163281.2
(22) Anmeldetag: 11.04.2013
(51) Int. Cl.: H02M 7/5387, H02H 7/122, H02M 1/32

(54) **Stromrichter mit redundanter Zwischenkreisspannungsmessung, sowie Verfahren zum Betreiben eines Stromrichters**
Power converter with redundant link circuit voltage measuring circuit, and method for operating a power converter
Convertisseur doté d'une mesure de tension de circuit intermédiaire redondante tout comme procédé destiné au fonctionnement d'un convertisseur de courant

(30) Priorität: 02.06.2012 DE 102012104801
(43) Veröffentlichungstag der Anmeldung: 04.12.2013
(73) Patentinhaber: SEMIKRON Elektronik GmbH & Co. KG, 90431 Nürnberg (DE)
(72) Erfinder: Kraus, Jochen, 90419 Nürnberg (DE)

(56) Entgegenhaltungen:
- EP-A1- 2 405 565
- WO-A1-02/059628
- JP-A- 2000 278 802
- JP-A- 2006 304 414
- JP-A- 2009 254 088
- US-A1- 2011 176 339

## Beschreibung

Die vorliegende Erfindung liegt auf dem Gebiet der Leistungselektronik und betrifft einen Stromrichter zum Speisen einer elektrischen Maschine mit einer Betriebsspannung, sowie ein Verfahren zum Betreiben eines solchen Stromrichters.

### Stand der Technik

Vor dem Hintergrund schwindender fossiler Ressourcen werden moderne Kraftfahrzeuge zunehmend mit einem Elektro- oder Hybridantrieb ausgestattet. Im Hinblick auf die erforderliche Antriebskraft müssen Antriebsmaschinen von Kraftfahrzeugen mit einer im Vergleich zum Bordnetz erheblich höheren Betriebsspannung von beispielsweise 400 bis 900 Volt betrieben werden, die typischer Weise von Gleichstromquellen wie Akkumulatoren oder Brennstoffzellen bereitgestellt wird. In der Fahrzeugtechnik werden überwiegend Drehstrommotoren (permanent- oder fremderregte Asynchron- oder Synchronmotoren) eingesetzt, die von einem Wechselrichter gespeist werden. Durch den Wechselrichter können Drehrichtung und Drehzahl der Antriebsmaschine bedarfsgerecht an die jeweilige Fahrsituation angepasst werden.

In einer typischen Bauweise verfügen Wechselrichter über einen Spannungszwischenkreis mit einem Ladungsspeicher zur Speisung einer Leistungseinheit, in der der Gleichstrom in Wechselstrom umgesetzt wird. Durch den Ladungsspeicher wird eine Spannungsstützung und -glättung für den Betrieb der Antriebsmaschine erreicht. Der grundsätzliche Aufbau eines Wechselrichters mit Spannungszwischenkreis ist dem Fachmann an sich bekannt und in der Patentliteratur bereits ausführlich beschrieben worden. Lediglich beispielhaft sei in diesem Zusammenhang auf die deutsche Patentschrift DE 19710371 C1 verwiesen.

Aus der EP 2 405 565 A1 ist ein Leistungsstromrichter bekannt, dessen Zwischenkreis mittels einer Entladeschaltung aktiv entladen wird. Aus DE 40 06 163 C1 ist ein Leistungsstromrichter bekannt, worin die Zwischenkreisspannung geregelt wird. Die Aufgabe der vorliegenden Erfindung darin, herkömmliche Stromrichter so weiterzubilden, dass deren Betriebssicherheit verbessert ist. Diese und weitere Aufgaben werden nach dem Vorschlag der Erfindung durch einen Stromrichter und ein Verfahren zum Betreiben eines Stromrichters mit den Merkmalen der nebengeordneten Patentansprüche gelöst. Vorteilhafte Ausgestaltungen der Erfindung sind durch die Merkmale der Unteransprüche angegeben.

Wie hier und im Weiteren verwendet, bezieht sich der Ausdruck "Stromrichter" auf an sich bekannte Vorrichtungen zur Wandlung von elektrischer Energie. Stromrichter in diesem Sinne sind insbesondere ein- oder mehrphasige Gleichstrom/Wechselstrom-Wandler (DC/AC-Wandler) bzw. Wechselrichter, beispielsweise 3-Phasen-Wechselrichter.

Der erfindungsgemäße Stromrichter dient zum Speisen einer elektrischen Maschine mit einer Betriebsspannung. Wie üblich umfasst der Stromrichter eine durch eine Steuerschaltung ansteuerbare Leistungseinheit zum Umwandeln von elektrischer Energie, welche insbesondere der Erzeugung von einer oder mehreren Wechselstromphasen aus Gleichstrom dient. Durch ei-06.06.2012 nen Spannungszwischenkreis mit einem Ladungsspeicher kann eine Zwischenkreisspannung für die Leistungseinheit bereit gestellt werden. Der Stromrichter umfasst beispielsweise eine Brückenschaltung mit einer oder mehreren Halbbrücken, in denen jeweils zwei Leistungsschalter mit ihren Laststrompfaden in Serienschaltung angeordnet sind, wobei ein TOP-Leistungsschalter mit seinem Laststromeingang an ein oberes bzw. höheres Potential (DC+) des Spannungszwischenkreises und ein BOT-Leistungsschalter mit seinem Laststromausgang an ein unteres bzw. niedrigeres Potential (DC-) des Spannungszwischenkreises angeschlossen ist. Ein Mittelabgriff zwischen TOP- und BOT-Leistungsschalter bildet einen Lastausgang der Halbbrücke zur Verbindung der Wechselstromphase mit einer elektrischen Last. Solche Leistungsschalter sind typischer Weise zum Leiten von elektrischen Strömen von mehreren hundert Ampere und Sperren von Spannungen bis ca. 1000 Volt ausgelegt. In der Praxis werden hierfür meist Bipolartransistoren mit isolierter Gate-Elektrode (IBGT) oder Feldeffekttransistoren (FET), insbesondere Metalloxid-Feldeffekttransistoren (MOSFET), eingesetzt.

Die Steuerschaltung zur Ansteuerung der Leistungsschalter ist in einen primärseitigen Schaltungsteil und einen sekundärseitigen Schaltungsteil unterteilt, wobei der primärseitige Schaltungsteil (Niedervoltseite) und der sekundärseitige Schaltungsteil (Hochvoltseite) durch wenigstens eine galvanisch trennende Übertragungseinrichtung galvanisch getrennt, jedoch datentechnisch miteinander verbunden sind. Der primärseitige Schaltungsteil umfasst wenigstens einen Steuerlogikbaustein zum Erzeugen von Steuersignalen zur Ansteuerung der Leistungsschalter. Wie üblich werden die Steuersignale im sekundärseitigen Schaltungsteil durch Treiberschaltungen in Steuerspannungen zum Ein- oder Ausschalten der Leistungsschalter umgesetzt.

Erfindungsgemäß umfasst der Stromrichter eine erste Schaltungsanordnung mit einem an den Spannungszwischenkreis angeschlossenen ersten Spannungsteiler mit einem ersten Spannungsabgriff zum Abgreifen einer ersten Teilspannung von der Zwischenkreisspannung. Der erste Spannungsabgriff ist mit einem Eingang eines Analog/Digital-Wandlers zum Erzeugen eines digitalen Spannungswerts auf Basis der am Eingang anliegenden ersten Teilspannung elektrisch verbunden. Ein Ausgang des Analog/Digital-Wandlers ist unter Zwischenschaltung einer ersten galvanisch trennenden Übertragungseinrichtung zur Übertragung des digitalen Spannungswerts an die Steuerschaltung angeschlossen. Zudem ist die Steuerschaltung dazu ausgebildet, auf Basis des digitalen Spannungswerts einen ersten Spannungswert für die Zwischenkreisspannung zu bestimmen. Die im Spannungszwischenkreis vorliegende Zwischenkreisspannung kann somit als Eingangsgröße zur Erzeugung der Steuersignale zur Ansteuerung der Leistungsschalter verwendet werden. Zudem erfolgt eine passive Entladung des Zwischenkreises über den ersten Spannungsteiler.

Erfindungsgemäß umfasst der Stromrichter eine parallel zur ersten Schaltungsanordnung angeordnete (von der ersten Schaltungsanordnung verschiedene) zweite Schaltungsanordnung mit einem an den Spannungszwischenkreis angeschlossenen zweiten Spannungsteiler mit einem zweiten Spannungsabgriff zum Abgreifen einer zweiten Teilspannung von der Zwischenkreisspannung. Hierbei ist der zweite Spannungsabgriff mit einem Eingang eines Spannung/Frequenz-Wandlers zum Erzeugen einer Pulsfolge auf Basis der am Eingang anliegenden zweiten Teilspannung elektrisch verbunden, wobei die Frequenz der Pulsfolge (beispielsweise linear) mit der zweiten Teilspannung korreliert. Ein Ausgang des Spannung/Frequenz-Wandlers ist unter Zwischenschaltung einer (von der ersten galvanisch trennenden Übertragungseinrichtung verschiedenen) zweiten galvanisch trennenden Übertragungseinrichtung zur Übertragung der Pulsfolge an die Steuerschaltung angeschlossen. Die Steuerschaltung ist dazu ausgebildet, auf Basis der übertragenen Pulsfolge einen zweiten Spannungswert für die Zwischenkreisspannung zu bestimmen.

Die zweite Schaltungsanordnung ermöglicht somit in vorteilhafter Weise eine redundante Bestimmung eines (momentanen) Spannungswerts für die Zwischenkreisspannung. Insbesondere kann bei einem Ausfall oder einer Fehlfunktion der ersten Schaltungsanordnung die Zwischenkreisspannung über die zweite Schaltungsanordnung bestimmt werden, so dass eine Funktion des Stromrichters gewährleistet ist. Zudem erfolgt eine passive Entladung des Spannungszwischenkreises auch über den zweiten Spannungsteiler, wodurch eine geringere Erwärmung der Ohmschen Widerstände der Spannungsteiler und somit eine Verringerung der elektrischen Verlustleistung erreicht werden kann. Die beiden Spannungsteiler sind zweckmäßig so ausgebildet, dass eine passive Entladung des Spannungszwischenkreises über die beiden Spannungsteiler innerhalb eines Zeitintervalls von wenigstens ein oder mehreren Stunden erfolgt, so dass der Betrieb des Stromrichters durch die passive Entladung nicht oder zumindest nicht nennenswert beeinträchtigt ist. Andererseits kann die Spannung im Zwischenkreis bei einer längeren Standzeit zuverlässig und sicher abgebaut werden, beispielsweise um Reparaturen am Fahrzeug vorzunehmen.

Vorteilhaft verfügen die beiden Spannungsteiler jeweils über einen Tiefpassfilter zur Filterung hochfrequenter elektrischer Signale, wodurch die elektromagnetische Verträglichkeit (EMV) des Stromrichters verbessert werden kann.

Bei einer vorteilhaften Ausgestaltung des erfindungsgemäßen Stromrichters umfasst die Steuerschaltung einen ersten Steuerlogikbaustein zum Erzeugen von Steuersignalen für die Leistungseinheit und einen zweiten Steuerlogikbaustein zum Erzeugen eines Fehlersignals bei einer Fehlfunktion des ersten Steuerlogikbausteins, welcher mit dem ersten Steuerlogikbaustein datentechnisch verbunden ist. Konkret ist der erste Steuerlogikbaustein dazu eingerichtet, auf Basis von Eingangsgrößen wie Zwischenkreisspannung und Drehzahl Steuersignale für die Leistungsschalter zur Einstellung eines von einer übergeordneten Steuereinrichtung angeforderten Soll-Betriebszustands der elektrischen Maschine zu erzeugen. Der zweite Steuerlogikbaustein ist dazu eingerichtet, auf Basis von beispielsweise separat zugeführten Eingangsgrößen wie Zwischenkreisspannung und Drehzahl einen Ist-Betriebszustand der elektrischen Maschine nach Ablauf einer vorgebbaren Wartezeit nach Erzeugen der Steuersignale zu bestimmen und ein Fehlersignal zu erzeugen, falls der Ist-Betriebszustand vom Soll-Betriebszustand abweicht. Die Steuerschaltung umfasst weiterhin eine Sicherheitslogik, welche dazu eingerichtet ist, die Steuersignale auf Basis des Fehlersignals so zu modifizieren, dass eine Speisung der elektrischen Maschine mit Betriebsspannung gestoppt wird. Eine Fehlfunktion oder ein Ausfall des ersten Steuerlogikbausteins kann somit zuverlässig und sicher erkannt werden, wobei durch eine Modifikation der Steuersignale in besonders einfacher Weise in die Steuerung der Leistungsschalter eingegriffen werden kann, um die Versorgung der elektrischen Maschine mit Betriebsspannung zu stoppen.

Bei dieser Ausgestaltung des erfindungsgemäßen Stromrichters ist die erste Schaltungsanordnung mit dem ersten Steuerlogikbaustein und die zweite Schaltungsanordnung mit dem zweiten Steuerlogikbaustein verbunden.

Bei einer ersten Variante dieser Ausgestaltung des erfindungsgemäßen Stromrichters ist der erste Steuerlogikbaustein dazu ausgebildet, auf Basis des digitalen Spannungswerts den ersten Spannungswert für die Zwischenkreisspannung zu bestimmen und der zweite Steuerlogikbaustein ist dazu ausgebildet, auf Basis der Pulsfolge den zweiten Spannungswert für die Zwischenkreisspannung zu bestimmen und an den ersten Steuerlogikbaustein zu übermitteln. Durch diese Maßnahme kann in vorteilhafter Weise erreicht werden, dass auch bei einem Ausfall der ersten Schaltungsanordnung die Zwischenkreisspannung bestimmt und als Eingangsgröße für die Steuersignale genutzt werden kann.

Bei einer zweiten Variante dieser Ausgestaltung des erfindungsgemäßen Stromrichters, welche alternativ oder zusätzlich zur ersten Variante vorgesehen sein kann, ist der erste Steuerlogikbaustein dazu ausgebildet ist, auf Basis des digitalen Spannungswerts den ersten Spannungswert für die Zwischenkreisspannung zu bestimmen und der zweite Steuerlogikbaustein ist dazu ausgebildet, auf Basis der Pulsfolge den zweiten Spannungswert für die Zwischenkreisspannung zu bestimmen, mit dem ersten Spannungswert für die Zwischenkreisspannung abzugleichen und ein Fehlersignal zu erzeugen, falls ein vorgebbarer Unterschied zwischen dem ersten und zweiten Spannungswert vorliegt. Die Betriebssicherheit des Stromrichters kann durch diese Maßnahme noch weiter verbessert werden, da bei einem (signifikanten) Unterschied im Spannungswert der über die beiden Schaltungsanordnungen bestimmten Zwischenkreisspannung durch den zweiten Steuerlogikbaustein ein Fehlersignal erzeugt wird, um die elektrische Maschine in einen sicheren Betriebszustand zu überführen. Falls ein solcher Unterschied im Spannungswert der über die beiden Schaltungsanordnungen bestimmten Zwischenkreisspannung nicht vorliegt, wird kein Fehlersignal erzeugt.

Bei einer weiteren Ausgestaltung des erfindungsgemäßen Stromrichters, welche insbesondere mit der ersten und/oder zweiten Variante obiger Ausgestaltung kombinierbar ist, ist die zweite Schaltungsanordnung mit dem ersten Steuerlogikbaustein verbunden und der erste Steuerlogikbaustein dazu ausgebildet, auf Basis der übertragenen Pulsfolge den zweiten Spannungswert für die Zwischenkreisspannung zu bestimmen. Durch diese Maßnahme kann erreicht werden, dass bei einem Ausfall der ersten Schaltungsanordnung der zweite Spannungswert für die Zwischenkreisspannung vom ersten Steuerlogikbaustein bestimmt wird, so dass eine Übertragung des zweiten Spannungswerts vom zweiten Steuerlogikbaustein auf den ersten Steuerlogikbaustein nicht erforderlich ist.

Die Erfindung erstreckt sich weiterhin auf eine elektrische Maschine mit einem wie oben beschrieben ausgebildeten Stromrichter zur Speisung mit einer Betriebsspannung.

Des Weiteren erstreckt sich die Erfindung ein Kraftfahrzeug mit einem Elektro- oder Hybridantrieb, das mit einer solchen elektrischen Maschine mit Stromrichter als Antriebsmaschine ausgerüstet ist.

Ferner erstreckt sich die Erfindung auf Verfahren zum Betreiben eines Stromrichters mit einem Spannungszwischenkreis zum Bereitstellen einer Zwischenkreisspannung für eine durch eine Steuerschaltung ansteuerbare Leistungseinheit zum Umwandeln von elektrischer Energie. Das Verfahren umfasst die folgenden Schritte:
- Abgreifen einer ersten Teilspannung von der Zwischenkreisspannung und Umwandeln der ersten Teilspannung in einen digitalen Spannungswert,
- Übertragen des digitalen Spannungswerts unter Zwischenschaltung einer ersten galvanisch trennenden Übertragungseinrichtung an die Steuerschaltung,
- Bestimmen eines ersten Spannungswerts für die Zwischenkreisspannung auf Basis des digitalen Spannungswerts,
- Abgreifen einer zweiten Teilspannung von der Zwischenkreisspannung und Umwandeln der zweiten Teilspannung in eine Pulsfolge,
- Übertragen der Pulsfolge unter Zwischenschaltung einer zweiten galvanisch trennenden Übertragungseinrichtung an die Steuerschaltung,
- Bestimmen eines zweiten Spannungswerts für die Zwischenkreisspannung auf Basis der Pulsfolge durch die Steuerschaltung.

Eine vorteilhafte Ausgestaltung des Verfahrens umfasst die folgenden Schritte:
- Übertragen des digitalen Spannungswerts an einen ersten Steuerlogikbaustein zum Erzeugen von Steuersignalen für die Leistungseinheit und Bestimmen des ersten Spannungswerts für die Zwischenkreisspannung auf Basis des digitalen Spannungswerts durch den ersten Steuerlogikbaustein,
- Übertragen der Pulsfolge an einen mit dem ersten Steuerlogikbaustein verbundenen zweiten Steuerlogikbaustein zum Erzeugen eines Fehlersignals bei einer Fehlfunktion des ersten Steuerlogikbausteins und Bestimmen des zweiten Spannungswerts für die Zwischenkreisspannung auf Basis der Pulsfolge durch den zweiten Steuerlogikbaustein,
- Übermitteln des zweiten Spannungswerts für die Zwischenkreisspannung an den ersten Steuerlogikbaustein.

Eine vorteilhafte Ausgestaltung des Verfahrens, welche insbesondere mit obiger Ausgestaltung kombinierbar ist, umfasst die folgenden Schritte:
- Übertragen des digitalen Spannungswerts an einen ersten Steuerlogikbaustein zum Erzeugen von Steuersignalen für die Leistungseinheit und Bestimmen des ersten Spannungswerts für die Zwischenkreisspannung auf Basis des digitalen Spannungswerts durch den ersten Steuerlogikbaustein,
- Übertragen der Pulsfolge an einen mit dem ersten Steuerlogikbaustein verbundenen zweiten Steuerlogikbaustein zum Erzeugen eines Fehlersignals bei einer Fehlfunktion des ersten Steuerlogikbausteins und Bestimmen des zweiten Spannungswerts für die Zwischenkreisspannung auf Basis der Pulsfolge durch den zweiten Steuerlogikbaustein,
- Abgleichen des zweiten Spannungswerts für die Zwischenkreisspannung mit dem ersten Spannungswert für die Zwischenkreisspannung und Erzeugen eines Fehlersignals, falls ein vorgebbarer Unterschied zwischen dem ersten und zweiten Spannungswert vorliegt, wobei die Steuersignale auf Basis des Fehlersignals so modifiziert werden, dass eine Umwandlung von elektrischer Energie gestoppt wird.

Bei einer weiteren vorteilhaften Ausgestaltung des Verfahrens wird die Pulsfolge an den ersten Steuerlogikbaustein übertragen und der zweite Spannungswert für die Zwischenkreisspannung auf Basis der Pulsfolge durch den ersten Steuerlogikbaustein bestimmt.

Die mit dem erfindungsgemäßen Verfahren und dessen Ausgestaltungen erreichten Vorteile wurden bereits im Zusammenhang mit dem erfindungsgemäßen Stromrichter beschrieben, so dass zur Vermeidung von Wiederholungen auf die dortigen Ausführungen verwiesen wird.

Es versteht sich, dass die verschiedenen Ausgestaltungen der Erfindung einzeln oder in beliebigen Kombinationen realisiert sein können, um Verbesserungen herkömmlicher Stromrichter und deren Betriebsverfahren zu erreichen. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Ausführungsbeispiel

Die Erfindung wird nun anhand eines Ausführungsbeispiels näher erläutert, wobei Bezug auf die beigefügten Zeichnungen genommen wird. Es zeigen:
- Fig. 1: eine schematische Darstellung eines 3-Phasen-Wechselrichters;
- Fig. 2: eine schematische Darstellung der Schaltungsanordnungen zur Bestimmung der Zwischenkreisspannung des 3-Phasen-Wechselrichters von Fig. 1.

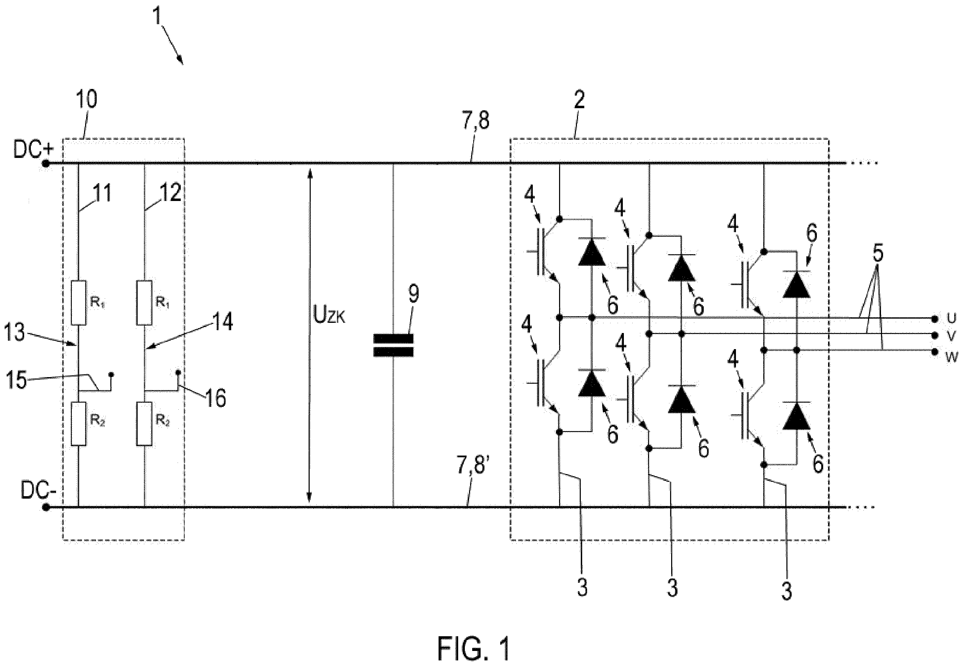

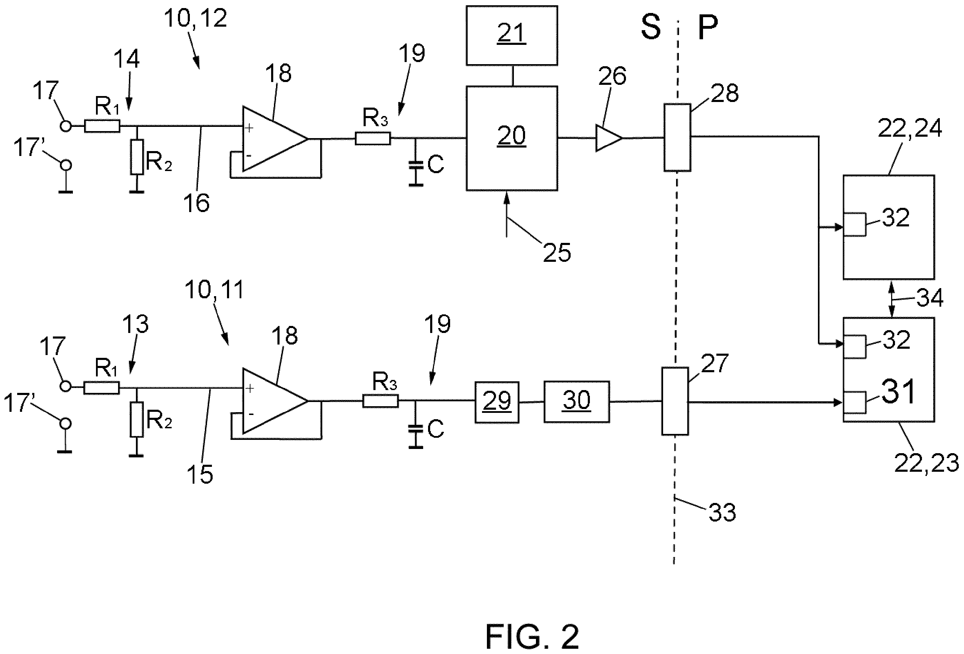

In den Figuren ist ein Ausführungsbeispiel eines insgesamt mit der Bezugszahl 1 bezeichneten, erfindungsgemäßen 3-Phasen-Wechselrichters zur Wandlung einer Gleichspannung in drei Wechselstromphasen beispielsweise zur Speisung eines Drehstrommotors eines Kraftfahrzeugs mit Elektro- oder Hybridantrieb veranschaulicht. Konkret zeigt Fig. 1 die Sekundär- bzw. Hochvoltseite "S" des 3-Phasen-Wechselrichters 1, welche in der Regel eine Arbeitsspannung von mehreren Hundert Volt aufweist. Die Primär- bzw. Niedervoltseite "P" enthält eine in Fig. 2 veranschaulichte Steuerschaltung 22, deren Arbeitsspannung(en), den üblichen Logik- und Bordnetzspannungen entsprechen und typischer Weise im Bereich von 1 bis 24 Volt liegen. Primär- und Sekundärseite des 3-Phasen-Wechselrichters 1 sind galvanisch getrennt, jedoch datentechnisch miteinander verbunden.

Wie in Fig. 1 gezeigt, hat der 3-Phasen-Wechselrichter 1 einen modularen Aufbau und umfasst eine Mehrzahl paralleler Module, von denen in Fig. 1 nur jene dargestellt sind, welche dem Verständnis der Erfindung dienen. So umfasst der 3-Phasen-Wechselrichter 1 ein Leistungsmodul 2 mit drei Halbbrücken 3, von denen jede zur Erzeugung einer Wechselstromphase u, v, w dient. Jede Halbbrücke 3 verfügt in an sich bekannter Weise über ein Schalterpaar aus zwei in Reihe geschalteten Leistungsschaltern 4, die typischer Weise als Leistungstransistoren, z.B. bipolare Leistungstransistoren mit isolierter Gate-Elektrode (IGBTs) oder Leistungs-MOSFETs, ausgebildet sind. Jedem Leistungsschalter 4 ist eine Freilaufdiode 6 mit entgegen gesetzter Durchlassrichtung parallel geschaltet. Die Wechselstromphasen u, v, w werden jeweils durch einen Mittelabgriff 5 zwischen zwei in Reihe geschalteten Leistungsschaltern 4 einer Halbbrücke 3 abgegriffen und sind jeweils mit einem Wicklungsstrang (nicht gezeigt) des Drehstrommotors elektrisch verbunden, wobei jedem Wicklungsstrang zur Steuerung von Drehrichtung und Drehzahl ein Potential vorbestimmter Polarität für eine bestimmte Zeitdauer geliefert wird. Zu diesem Zweck werden die Leistungsschalter 4 von der Steuerschaltung 22 durch Steuersignale entsprechend angesteuert.

Das Leistungsmodul 2 wird von einem Spannungszwischenkreis 7 mit einer Zwischenkreisspannung U_{ZK} (Gleichspannung) gespeist. Zu diesem Zweck sind die parallelen Halbrücken 3 mit zwei Zwischenkreisleitungen 8, 8' elektrisch verbunden, die an einen Kondensator 9 (Ladungsspeicher) so angeschlossen sind, dass die eine Zwischenkreisleitung 8 ein höheres Potential (DC+) und die andere Zwischenkreisleitung 8' ein niedrigeres Potential (DC-) aufweist. Aus der Differenz der beiden Potentiale (DC+, DC-) ergibt sich die Zwischenkreisspannung U_{ZK}, welche von den Halbbrücken 3 zu den Wechselstromphasen u, v, w umgesetzt wird. Um über eine für den Betrieb des Kraftfahrzeugs ausreichende Motorleistung zu verfügen, muss die Zwischenkreisspannung U_{ZK} ausreichend groß sein. Beispielsweise liegt die Zwischenkreisspannung U_{ZK} im Bereich von 400-900 Volt. Die Kapazität des Kondensators 9 beträgt beispielsweise 1000 µF. Im Betrieb wird der Kondensator 9 durch eine an die beiden Zwischenkreisleitungen 8, 8' angeschlossene Gleichstromquelle (nicht gezeigt), beispielsweise ein Akkumulator oder eine Brennstoffzelle, elektrisch geladen.

In Fig. 1 nicht dargestellt sind weitere Module des 3-Phasen-Wechselrichters 1, welche in Parallelschaltung zum Leistungsmodul 2 an die beiden Zwischenkreisleitungen 8, 8' elektrisch angeschlossen sind. Namentlich genannt seien beispielsweise Filtermodule und Drosselmodule für die Wechselstromphasen u, v, w. Ebenso nicht gezeigt sind Stromsensoren für die drei Wechselstromphasen u, v, w.

Ein wesentlicher Aspekt des 3-Phasen-Wechselrichers 1 ist eine insgesamt mit der Bezugszahl 10 bezeichnete Zusatzschaltung, welche zum passiven Entladen des Spannungszwischenkreises 7 und Messen der Zwischenkreisspannung U_{ZK} dient. Die Zusatzschaltung 10 ist parallel zum Leistungsmodul 2 an die beiden Zwischenkreisleitungen 8 elektrisch angeschlossen und umfasst zwei parallele Schaltungsanordnungen 11, 12, die in Fig. 1 teilweise dargestellt sind. Die beiden Schaltungsanordnungen 11, 12 verfügen jeweils über einen Spannungsteiler 13, 14, durch den die beiden Zwischenkreisleitungen 8, 8' elektrisch miteinander verbunden sind.

So umfasst eine erste Schaltungsanordnung 11 einen ersten Spannungsteiler 13 aus zwei in Serie verschalteten Ohmschen Widerständen, hier mit R₁ und R₂ bezeichnet. Die beiden Widerstände R₁, R₂ dienen zur passiven (d.h. nicht steuerbaren) Entladung des Spannungszwischenkreises 7. Hierbei ist die Größe der Ohmschen Widerstände R₁, R₂ so gewählt, dass eine Entladung des Spannungszwischenkreises 7 über einen hinreichend langen Zeitraum von beispielsweise wenigstens ein oder mehreren Stunden erfolgt, so dass die Betriebsfähigkeit des 3-Phasen-Wechselrichtrs 1 nicht bzw. nicht nennenswert beeinträchtigt ist. Zudem wird eine übermäßige Erwärmung der Ohmschen Widerstände R₁, R₂ durch einen vergleichsweise niedrigen Entladungsstrom vermieden. Im vorliegenden Ausführungsbeispiel sind als Ohmsche Widerstände R₁ = 228 kOhm und R₂ = 1,15 kOhm gewählt, wobei es sich versteht, dass gleichermaßen andere für die beabsichtigte Anwendung geeignete Widerstände eingesetzt werden können, solange gewährleistet ist, dass die Dauer der passiven Entladung die Betriebsfähigkeit des 3-Phasen-Wechselrichtrs 1 nicht beeinträchtigt.

Eine zweite Schaltungsanordnung 12 umfasst einen zweiten Spannungsteiler 14, der analog zum ersten Spannungsteiler 13 aufgebaut ist und zwei in Serie verschaltete Ohmsche Widerstände R₁ und R₂ umfasst, welche beispielsweise die gleichen Widerstandswerte haben wie die Widerstände R₁ und R₂ des ersten Spannungsteilers 13, jedoch auch hiervon verschiedene Widerstandwerte aufweisen können. Wie der erste Spannungsteiler 13 dient auch der zweite Spannungsteiler 14 zur passiven Entladung des Spannungszwischenkreises 7. Durch die Aufteilung des Entladestroms auf zwei Strompfade kann in vorteilhafter Weise eine geringere Erwärmung der Ohmschen Widerstände und, damit einhergehend, eine Verringerung der elektrischen Verlustleistung erreicht werden. Die Betriebssicherheit des 3-Phasen-Wechselrichters 1 wird dadurch verbessert und kostengünstigere Ohmsche Widerstände R₁ und R₂ können verwendet werden, wodurch sich die Fertigungskosten des 3-Phasen-Wechselrichters 1 verringern.

Ferner weisen die beiden Spannungsteiler 13, 14 jeweils einen Spannungsabgriff 15, 16 (Zwischenabgriff) zwischen den beiden Widerständen R₁ und R₂ auf (analog als erster Spannungsabgriff 15 bzw. zweiter Spannungsabgriff 16 bezeichnet), die jeweils zur (redundanten) Erfassung der Zwischenkreisspannung U_{ZK} dienen. Dies wird im Weiteren unter Bezugnahme auf Fig. 2 näher erläutert.

In Fig. 2 sind die beiden Schaltungsanordnungen 11, 12 der Zusatzschaltung 10 im Detail gezeigt, wobei die erste Schaltungsanordnung 11 als unterer Schaltungszweig und die zweite Schaltungsanordnung 12 als oberer Schaltungszweig dargestellt sind. Die beiden Schaltungsanordnungen 11, 12 sind jeweils an die Steuerschaltung 22 zur Steuerung des Leistungsmoduls 2 datentechnisch angeschlossen, welche primärseitig einen ersten Steuerlogikbaustein 23 und einen zweiten Steuerlogikbaustein 24 umfasst.

Demnach umfasst die erste Schaltungsanordnung 11 sekundärseitig den ersten Spannungsteiler 13 mit den beiden Ohmschen Widerständen R₁ und R₂ und dem ersten Spannungsabgriff 15. Über in Fig. 1 nicht näher bezeichnete Anschlüsse 17, 17¹ liegt die Zwischenkreisspannung U_{ZK} dem ersten Spannungsteiler 13 an, wobei der mit dem unteren Potential (DC-) der Zwischenkreisspannung U_{ZK} verbundene Anschluss 17' hier beispielsweise ein Massenanschluss ist. Durch den ersten Spannungsteiler 13 wird die Zwischenkreisspannung U_{ZK} auf eine erste Teilspannung geteilt, die eine einfache und kostengünstige Prozessierung durch digitale Schaltungstechnik ermöglicht, hier beispielsweise eine Spannung im Bereich von 0 bis 3 Volt.

Wie in Fig. 2 gezeigt, ist der erste Spannungsabgriff 15 mit dem nichtinvertierenden bzw. positiven Eingang (+) eines Impedanzwandlers 18 verbunden, hier beispielsweise als Spannungsfolger bzw. nichtinvertierender Operationsverstärker realisiert. Der Ausgang des Impedanzwandlers 18 ist mit dessen invertierenden bzw. negativen Eingang (-) verbunden. Durch den Impedanzwandler 18 kann eine Impedanzanpassung einer hochohmigen Spannungsquelle für die niederohmige nachfolgende Last erreicht werden, wobei der Impedanzwandler 18 als niederohmige Spannungsquelle wirkt. Dem Impedanzwandler 18 wird die durch den ersten Spannungsabgriff 15 von der Zwischenkreisspannung U_{ZK} abgegriffene erste Teilspannung als Eingangsspannung zugeführt.

Der Ausgang des Impedanzwandlers 18 ist unter Zwischenschaltung eines RC-Glieds 19 mit einem Eingang eines Analog/Digital-Wandlers 29 verbunden. Das RC-Glied 19 besteht aus einem Ohmschen Widerstand (R₃) und einem an Masse angeschlossenen Kondensator (C) und wirkt als Tiefpassfilter zur Filterung hochfrequenter elektrische Signale, wodurch eine Verbesserung der elektromagnetischen Verträglichkeit (EMV) erreicht werden kann. Dem Eingang des Analog/Digital-Wandlers 29 wird die am Ausgang des Impedanzwandlers 18 bereit gestellte analoge zweite Teilspannung als Eingangsspannung zugeführt und in einen digitalen Spannungswert umgewandelt.

Der digitale Spannungswert wird anschließend einem sekundärseitigen dritten Steuerlogikbaustein 30 zugeführt, in dem eine signaltechnische Bearbeitung des digitalen Spannungswerts erfolgt, worauf hier nicht weiters eingegangen wird. Bei einer alternativen Ausgestaltung des 3-Phasen-Wechselrichters 1 ist ein solcher dritter Steuerlogikbaustein 30 nicht vorgesehen.

Anschließend wird der digitale Spannungswert einem ersten Optokoppler 27 zugeführt, durch den eine galvanisch getrennte Übertragung zwischen Primär- und Sekundärseite ermöglicht ist. Die galvanische Trennung zwischen Primär- und Sekundärseite ist in Fig. 2 durch eine gestrichelte Trennlinie 33 angedeutet. Es versteht sich, dass anstelle eines Optokopplers (Lichtwellenleiter) ein anderes Mittel zur galvanisch getrennten Übertragung von Signalen zwischen Primär- und Sekundärseite eingesetzt werden kann. Der erste Optokoppler 27 umfasst eine Treiberschaltung (nicht gezeigt) zur Übertragung des digitalen Spannungswerts von der Sekundärseite S an die Primärseite P, was dem Fachmann bekannt ist, so dass hier nicht näher darauf eingegangen werden muss.

Der durch den ersten Optokoppler 27 übertragene digitale Spannungswert wird primärseitig dem ersten Steuerlogikbaustein 23 zugeführt, welcher über eine erste Spannungsbestimmungseinheit 31 verfügt, die dazu ausgebildet ist, auf Basis des digitalen Spannungswerts einen ersten Spannungswert für die Zwischenkreisspannung U_{ZK} zu bestimmen. Die im Spannungszwischenkreis 7 vorliegende Zwischenkreisspannung U_{ZK} ist eine unerlässliche Eingangsgröße zur Steuerung des Leistungsmoduls 2 zur Speisung des Drehstrommotors mit einer Betriebsspannung.

Die zweite Schaltungsanordnung 12 umfasst sekundärseitig den zweiten Spannungsteiler 14 mit den beiden Ohmschen Widerständen R₁ und R₂ und dem zweiten Spannungsabgriff 16. Die Zwischenkreisspannung U_{ZK} liegt über Anschlüsse 17, 17' dem zweiten Spannungsteiler 14 an, wobei die abgegriffene zweite Teilspannung dem positiven Eingang (+) eines sekundärseitigen Impedanzwandlers 18 als Eingangsspannung zugeführt wird, dessen Ausgang mit einem RC-Glied 19 zur Filterung hochfrequenter Signale verbunden ist. Insoweit gleicht der Aufbau der zweiten Schaltungsanordnung 12 der ersten Schaltungsanordnung 11, wobei zur Vermeidung unnötiger Wiederholungen auf obige Ausführungen zur ersten Schaltungsanordnung 11 Bezug genommen wird.

Das RC-Glied 19 ist mit einem Eingang eines sekundärseitigen synchronen Spannung/Frequenz-Wandlers 20 verbunden. Dem Eingang des Spannung/Frequenz-Wandlers 20 wird die am Ausgang des Impedanzwandlers 18 bereit gestellte zweite Teilspannung als Eingangsspannung zugeführt und in einen digitalen Frequenzwert bzw. eine Pulsfolge (z.B. Rechteckpulse) umgewandelt. Der Spannung/Frequenz-Wandler 20 wird von einer Spannungsquelle 21 mit einer Arbeits- bzw. Referenzspannung (V_{Ref}) von beispielsweise 3,3 Volt gespeist, die ihrerseits von der Steuerschaltung 22 gespeist wird, was in Fig. 2 nicht näher dargestellt ist. Die Arbeitsfrequenz des Spannung/Frequenz-Wandlers 20 wird durch ein von der Steuerschaltung 22 erzeugtes Taktsignal vorgegeben und über eine Taktsignalleitung 25 dem Spannung/Frequenz-Wandler 20 zugeführt. Die Arbeitsweise des Spannung/Frequenz-Wandlers 20 beruht beispielsweise auf der Konversionstechnik mittels Ladungsausgleich (chargebalance conversion technique), worauf hier nicht näher eingegangen werden soll.

Konkret wird im Spannung/Frequenz-Wandler 20 die analoge Eingangsspannung (zweite Teilspannung) auf Basis der Arbeitsfrequenz kontinuierlich gesampelt und in eine Pulsfolge aus Rechteckpulsen umgewandelt, wobei die Frequenz der Rechteckpulse mit der Eingangsspannung korreliert, insbesondere zur Eingangsspannung proportional ist. Für ein analoges Eingangssignal im Bereich von 0 Volt bis zur Referenzspannung V_{Ref} liegt die Frequenz der Rechteckpulse beispielsweise in einem Frequenzbereich von 10% bis 90% der Arbeitsfrequenz.

Die am Ausgang des Spannung/Frequenz-Wandler 20 bereit gestellte Pulsfolge aus Rechteckpulsen kann in technisch besonders einfacher Weise auf die Primärseite P übertragen werden, hier über einen vom ersten Optokoppler 27 verschiedenen zweiten Optokoppler 28, wobei anstelle des zweiten Optokopplers 28 eine andere galvanisch trennende Übertragungseinrichtung eingesetzt werden kann. Es versteht sich, dass der zweite Optokoppler 28 über eine Treiberschaltung (nicht gezeigt) zur Übertragung des digitalen Frequenzwerts von der Sekundärseite S an die Primärseite P verfügt, worauf hier nicht näher eingegangen wird. Zwischen den Spannung/Frequenz-Wandler 20 und den zweiten Optokoppler 28 ist ein invertierender Puffer 26 (Operationsverstärker) geschaltet, um eine ausreichende Treiberleistung für den zweiten Optokoppler 28 zur Verfügung zu stellen.

Die durch den zweiten Optokoppler 28 übertragene Pulsfolge (bzw. digitaler Frequenzwert) wird primärseitig sowohl dem ersten Steuerlogikbaustein 23 als auch dem zweiten Steuerlogikbaustein zugeführt, die jeweils über eine zweite Spannungsbestimmungseinheit 32 verfügen, die dazu ausgebildet ist, auf Basis der Pulsfolge einen zweiten Spannungswert für die Zwischenkreisspannung U_{ZK} zu bestimmen. Die zweite Spannungsbestimmungseinheit 32 weist zu diesem Zweck eine Puls- bzw. Frequenzzähleinrichtung auf.

Die zweite Schaltungsanordnung 12 stellt einen eigenständigen Pfad zum redundanten Bestimmen von Spannungswerten für die Zwischenkreisspannung U_{ZK} dar, so dass bei einem Ausfall der ersten Schaltungsanordnung 11 die Zwischenkreisspannung U_{ZK} bestimmt werden kann, wodurch die Betriebssicherheit des 3-Phasen-Wechselrichters 1 wesentlich verbessert wird. Hierbei wird die Pulsfolge des Spannung/Frequenz-Wandlers 20 den beiden primärseitigen Steuerlogikbausteinen 23, 24 zur jeweiligen Bestimmung des zweiten Spannungswerts der Zwischenkreisspannung U_{ZK} zugeführt, wodurch die Betriebssicherheit 3-Phasen-Wechselrichters 1 noch weiter verbessert wird, wie im Weiteren näher erläutert wird.

Wie bereits ausgeführt, umfasst die Steuerschaltung 22 primärseitig einen ersten Steuerlogikbaustein 23 und einen zweiten Steuerlogikbaustein 24, die Teil eines primärseitigen Schaltungsteils (Niedervoltseite) sind. Im ersten Steuerlogikbaustein 23 werden die Steuersignale (PWM-Signale) für die Leistungsschalter 4 zur Bereitstellung eines von einer übergeordneten Steuereinrichtung des Drehstrommotors (z.B. Motorsteuergerät) angeforderten Soll-Betriebszustands, beispielsweise gegeben durch eine Drehmomentanforderung (Soll-Drehmoment) und eine Drehzahlanforderung (Soll-Drehzahl), erzeugt. Zu diesem Zweck werden dem ersten Steuerlogikbaustein 23, neben der Zwischenkreisspannung U_{ZK}, verschiedene Eingangsgrößen wie beispielsweise Amplituden der erzeugten Wechselstromphasen (u, v, w) und Motordrehzahl zur Bestimmung eines Ist-Betriebszustands zugeführt, was in Fig. 2 nicht näher dargestellt ist. Lediglich ergänzend sei darauf hingewiesen, dass die Steuerschaltung 22 über einen sekundärseitigen Schaltungsteil (Hochvoltseite) verfügt, die durch eine galvanisch trennende Übertragungseinrichtung mit dem primärseitigen Schaltungsteil verbunden ist. Im sekundärseitigen Schaltungsteil werden die im ersten Steuerlogikbaustein 23 erzeugten Steuersignale durch Treiberschaltungen in Steuerspannungen zum Ein- oder Ausschalten der Leistungsschalter 4 umgesetzt.

Im zweiten Steuerlogikbaustein 24, welcher über einen Datenbus 34 mit dem ersten Steuerlogikbaustein 23 verbunden ist, kann ein Fehlersignal erzeugt werden, falls erkannt wird, dass nach erfolgter Regelung durch den ersten Steuerlogikbaustein 23 ein Ist-Betriebszustand von dem Soll-Betriebszustand abweicht. Zur Bestimmung des Ist-Betriebszustands werden die genannten Eingangsgrößen unabhängig vom ersten Steuerlogikbaustein 23 auch dem zweiten Steuerlogikbaustein 24 zugeführt. Die Steuerschaltung 22 verfügt weiterhin über eine Sicherheitslogik, welche dazu eingerichtet ist, auf Basis des Fehlersignals die Steuersignale so zu modifizieren, dass die Speisung des Drehstrommotors mit Betriebsspannung gestoppt wird. Durch die Maßnahme kann in vorteilhafter Weise eine Fehlfunktion oder ein Ausfall des ersten Steuerlogikbausteins 23 durch den zweiten Steuerlogikbaustein 24 erkannt und die Speisung des Drehstrommotors gestoppt werden.

Ein besonderer Vorteil des 3-Phasen-Wechselrichters 1 liegt darin, dass der erste Spannungswert für die Zwischenkreisspannung U_{ZK} über die erste Schaltungsanordnung 11 vom ersten Steuerlogikbaustein 23 und unabhängig hiervon der zweite Spannungswert für die Zwischenkreisspannung über die zweite Schaltungsanordnung 12 sowohl vom ersten Steuerlogikbaustein 23 als auch vom zweiten Steuerlogikbaustein 24 bestimmt werden kann. Unterliegt die erste Schaltungsanordnung 11 einer Fehlfunktion, kann die Zwischenkreisspannung U_{ZK} durch die zweite Schaltungsanordnung 12 bestimmt werden, wobei die Zwischenkreisspannung U_{ZK} direkt im ersten Steuerlogikbaustein 23 bestimmt und/oder im zweiten Steuerlogikbaustein 24 bestimmt und über den Datenbus 34 an den ersten Steuerlogikbaustein 23 übertragen werden kann. Eine ordnungsgemäße Funktion des 3-Phasen-Wechselrichters 1 kann somit bei einer Fehlfunktion der ersten Schaltungsanordnung 11 sichergestellt werden. Andererseits wird bei einem vorgebbaren Unterschied zwischen dem ersten und zweiten Spannungswert der Zwischenkreisspannung U_{ZK} ein Fehlersignal durch den zweiten Steuerlogikbaustein 24 erzeugt, um die Erzeugung von Wechselstromphasen im 3-Phasen-Wechselrichter 1 zu stoppen und den Drehstrommotor in einen sicheren Betriebszustand zu überführen.

Ein besonderer Vorteil des erfindungsgemäßen Stromrichters liegt darin, dass die zweite Schaltungsanordnung 12 mit besonders kostengünstigen Schaltungskomponenten realisiert werden kann. Zur Erfüllung der Aufgaben genügt es, wenn die Messgenauigkeit in der zweiten Messanordnung 12 geringer ist als in der ersten Messanordnung 11. Der erfindungsgemäße 3-Phasen-Wechselrichter 1 schafft somit erstmals die Möglichkeit einer redundanten Messung der Zwischenkreisspannung U_{ZK} über zwei unabhängige Messpfade, wodurch die Betriebssicherheit verbessert wird. Zudem verteilt sich die elektrische Verlustleistung bei der passiven Entladung des Spannungszwischenkreises auf zwei Strompfade, wodurch insgesamt die Verlustleistung verringert und die Ohmschen Widerstände der Spannungsteiler kostengünstiger ausgeführt werden können.

### Bezugszeichenliste

1 3-Phasen-Wechselrichter
2 Leistungsmodul
3 Halbbrücke
4 Leistungsschalter
5 Mittelabgriff
6 Freilaufdiode
7 Spannungszwischenkreis
8, 8' Zwischenkreisleitung
9 Kondensator
10 Zusatzschaltung
11 erste Schaltungsanordnung
12 zweite Schaltungsanordnung
13 erster Spannungsteiler
14 zweiter Spannungsteiler
15 erster Spannungsabgriff
16 zweiter Spannungsabgriff
17, 17' Anschluss
18 Impedanzwandler
19 RC-Glied
20 Spannung/Frequenz-Wandler
21 Spannungsquelle
22 Steuerschaltung
23 erster Steuerlogikbaustein
24 zweiter Steuerlogikbaustein
25 Taktsignalleitung
26 Puffer
27 erster Optokoppler
28 zweiter Optokoppler
29 Analog/Digital-Wandler
30 dritter Steuerlogikbaustein
31 erste Spannungsbestimmungseinheit
32 zweite Spannungsbestimmungseinheit
33 Trennlinie
34 Datenbus

## Patentansprüche

1. Stromrichter (1) mit einem Spannungszwischenkreis (7) zum Bereitstellen einer Zwischenkreisspannung (U_{ZK}) für eine durch eine Steuerschaltung (22) ansteuerbare Leistungseinheit (2) zum Umwandeln von elektrischer Energie, welcher umfasst:
- eine erste Schaltungsanordnung (11) mit einem an den Spannungszwischenkreis (7) angeschlossenen ersten Spannungsteiler (13) mit einem ersten Spannungsabgriff (15) zum Abgreifen einer ersten Teilspannung, der mit einem Eingang eines Analog-Digital-Wandlers (29) zum Erzeugen eines digitalen Spannungswert auf Basis der ersten Teilspannung elektrisch verbunden ist, wobei eine passive Entladung des Spannungszwischenkreises (7) über den ersten Spannungsteiler (13) erfolgt, wobei ein Ausgang des Analog-Digital-Wandlers (29) unter Zwischenschaltung einer ersten galvanisch trennenden Übertragungseinrichtung (27) zur Übertragung des digitalen Spannungswerts an die Steuerschaltung (22) angeschlossen ist, wobei die Steuerschaltung (22) dazu ausgebildet ist, auf Basis des digitalen Spannungswerts einen ersten Spannungswert für die Zwischenkreisspannung (U_{ZK}) zu bestimmen,
- eine zweite Schaltungsanordnung (12) mit einem an den Spannungszwischenkreis (7) angeschlossenen zweiten Spannungsteiler (14) mit einem zweiten Spannungsabgriff (16) zum Abgreifen einer zweiten Teilspannung, der mit einem Eingang eines Spannung/Frequenz-Wandlers (20) zum Erzeugen einer Pulsfolge auf Basis der zweiten Teilspannung elektrisch verbunden ist, wobei eine passive Entladung des Spannungszwischenkreises (7) über den zweiten Spannungsteiler (14) erfolgt, wobei ein Ausgang des Spannung/Frequenz-Wandlers (20) unter Zwischenschaltung einer zweiten galvanisch trennenden Übertragungseinrichtung (28) zur Übertragung der Pulsfolge an die Steuerschaltung (22) angeschlossen ist, wobei die Steuerschaltung (22) dazu ausgebildet ist, auf Basis der übertragenen Pulsfolge einen zweiten Spannungswert für die Zwischenkreisspannung (U_{ZK}) zu bestimmen.

2. Stromrichter nach Anspruch 1, bei welchem die Steuerschaltung (22) einen ersten Steuerlogikbaustein (23) zum Erzeugen von Steuersignalen für die Leistungseinheit (2) und einen mit dem ersten Steuerlogikbaustein verbundenen zweiten Steuerlogikbaustein (24) zum Erzeugen eines Fehlersignals bei einer Fehlfunktion des ersten Steuerlogikbausteins (23) umfasst, wobei die Steuerschaltung eine Sicherheitslogik aufweist, welche dazu ausgebildet ist, die Steuersignale auf Basis des Fehlersignals so zu modifizieren, dass eine Umwandlung von elektrischer Energie gestoppt wird, wobei
- die erste Schaltungsanordnung (11) mit dem ersten Steuerlogikbaustein (23) und die zweite Schaltungsanordnung (12) mit dem zweiten Steuerlogikbaustein (24) verbunden sind,
- der erste Steuerlogikbaustein (23) dazu ausgebildet ist, auf Basis des digitalen Spannungswerts den ersten Spannungswert für die Zwischenkreisspannung (U_{ZK}) zu bestimmen,
- der zweite Steuerlogikbaustein (24) dazu ausgebildet ist, auf Basis der Pulsfolge den zweiten Spannungswert für die Zwischenkreisspannung (U_{ZK}) zu bestimmen und an den ersten Steuerlogikbaustein (23) zu übermitteln.

3. Stromrichter nach Anspruch 1 oder 2, bei welchem die Steuerschaltung (22) einen ersten Steuerlogikbaustein (23) zum Erzeugen von Steuersignalen für die Leistungseinheit (2) und einen mit dem ersten Steuerlogikbaustein verbundenen zweiten Steuerlogikbaustein (24) zum Erzeugen eines Fehlersignals bei einer Fehlfunktion des ersten Steuerlogikbausteins (23) umfasst, wobei die Steuerschaltung eine Sicherheitslogik aufweist, welche dazu ausgebildet ist, die Steuersignale auf Basis des Fehlersignals so zu modifizieren, dass eine Umwandlung von elektrischer Energie gestoppt wird, wobei
- die erste Schaltungsanordnung (11) mit dem ersten Steuerlogikbaustein (23) und die zweite Schaltungsanordnung (12) mit dem zweiten Steuerlogikbaustein (24) verbunden ist,
- der erste Steuerlogikbaustein (23) dazu ausgebildet ist, auf Basis des digitalen Spannungswerts den ersten Spannungswert für die Zwischenkreisspannung (U_{ZK}) zu bestimmen,
- der zweite Steuerlogikbaustein (24) dazu ausgebildet ist, auf Basis der Pulsfolge den zweiten Spannungswert für die Zwischenkreisspannung (U_{ZK}) zu bestimmen, mit dem ersten Spannungswert für die Zwischenkreisspannung (U_{ZK}) abzugleichen und ein Fehlersignal zu erzeugen, falls ein vorgebbarer Unterschied zwischen dem ersten und zweiten Spannungswert vorliegt.

4. Stromrichter nach einem der Ansprüche 2 oder 3, bei welchem die zweite Schaltungsanordnung (12) mit dem ersten Steuerlogikbaustein (23) verbunden und der erste Steuerlogikbaustein (23) dazu ausgebildet ist, auf Basis der übertragenen Pulsfolge den zweiten Spannungswert für die Zwischenkreisspannung (U_{ZK}) zu bestimmen.

5. Elektrische Maschine mit einem Stromrichter (1) nach einem der Ansprüche 1 bis 4 zur Speisung mit einer Betriebsspannung.

6. Kraftfahrzeug mit einem Elektro- oder Hybridantrieb, das mit einer elektrischen Maschine mit Stromrichter nach Anspruch 5 als Antriebsmaschine ausgerüstet ist.

7. Verfahren zum Betreiben eines Stromrichters (1) mit einem Spannungszwischenkreis (7) zum Bereitstellen einer Zwischenkreisspannung (U_{ZK}) für eine durch eine Steuerschaltung (22) ansteuerbare Leistungseinheit (2) zum Umwandeln von elektrischer Energie, mit den folgenden Schritten:
- Abgreifen einer ersten Teilspannung von der Zwischenkreisspannung (U_{ZK}) mittels eines an den Spannungszwischenkreis (7) angeschlossenen ersten Spannungsteilers (13), der einen ersten Spannungsabgriff (15) zum Abgreifen der ersten Teilspannung aufweist und Umwandeln der ersten Teilspannung in einen digitalen Spannungswert, wobei eine passive Entladung des Spannungszwischenkreises (7) über den ersten Spannungsteiler (13) erfolgt,
- Übertragen des digitalen Spannungswerts unter Zwischenschaltung einer ersten galvanisch trennenden Übertragungseinrichtung (27) an die Steuerschaltung (22),
- Bestimmen eines ersten Spannungswerts für die Zwischenkreisspannung (U_{ZK}) auf Basis des digitalen Spannungswerts,
- Abgreifen einer zweiten Teilspannung von der Zwischenkreisspannung (U_{ZK}) mittels eines an den Spannungszwischenkreis (7) angeschlossenen zweiten Spannungsteilers (14), der einem zweiten Spannungsabgriff (16) zum Abgreifen der zweiten Teilspannung aufweist und Umwandeln der zweiten Teilspannung in eine Pulsfolge, wobei eine passive Entladung des Spannungszwischenkreises (7) über den zweiten Spannungsteiler (14) erfolgt,
- Übertragen der Pulsfolge unter Zwischenschaltung einer zweiten galvanisch trennenden Übertragungseinrichtung (28) an die Steuerschaltung (22),
- Bestimmen eines zweiten Spannungswerts für die Zwischenkreisspannung (U_{ZK}) auf Basis der Pulsfolge durch die Steuerschaltung (22).

8. Verfahren nach Anspruch 7, mit den folgenden Schritten:
- Übertragen des digitalen Spannungswerts an einen ersten Steuerlogikbaustein (23) zum Erzeugen von Steuersignalen für die Leistungseinheit (2) und Bestimmen des ersten Spannungswerts für die Zwischenkreisspannung (U_{ZK}) auf Basis des digitalen Spannungswerts durch den ersten Steuerlogikbaustein (23),
- Übertragen der Pulsfolge an einen mit dem ersten Steuerlogikbaustein (23) verbundenen zweiten Steuerlogikbaustein (24) zum Erzeugen eines Fehlersignals bei einer Fehlfunktion des ersten Steuerlogikbausteins (23) und Bestimmen des zweiten Spannungswerts für die Zwischenkreisspannung (U_{ZK}) auf Basis der Pulsfolge durch den zweiten Steuerlogikbaustein (24),
- Übermitteln des zweiten Spannungswerts für die Zwischenkreisspannung (U_{ZK}) an den ersten Steuerlogikbaustein (23).

9. Verfahren nach Anspruch 7 oder 8, mit den folgenden Schritten:
- Übertragen des digitalen Spannungswerts an einen ersten Steuerlogikbaustein (23) zum Erzeugen von Steuersignalen für die Leistungseinheit (2) und Bestimmen des ersten Spannungswerts für die Zwischenkreisspannung (U_{ZK}) auf Basis des digitalen Spannungswerts durch den ersten Steuerlogikbaustein (23),
- Übertragen der Pulsfolge an einen mit dem ersten Steuerlogikbaustein (23) verbundenen zweiten Steuerlogikbaustein (24) zum Erzeugen eines Fehlersignals bei einer Fehlfunktion des ersten Steuerlogikbausteins (23) und Bestimmen des zweiten Spannungswerts für die Zwischenkreisspannung (U_{ZK}) auf Basis der Pulsfolge durch den zweiten Steuerlogikbaustein (24),
- Abgleichen des zweiten Spannungswerts für die Zwischenkreisspannung (U_{ZK}) mit dem ersten Spannungswert für die Zwischenkreisspannung (Uz_{K}) und Erzeugen eines Fehlersignals, falls ein vorgebbarer Unterschied zwischen dem ersten und zweiten Spannungswert vorliegt, wobei die Steuersignale auf Basis des Fehlersignals so modifiziert werden, dass eine Umwandlung von elektrischer Energie gestoppt wird.

10. Verfahren nach Anspruch 8 oder 9, bei welchem die Pulsfolge an den ersten Steuerlogikbaustein (23) übertragen und der zweite Spannungswert für die Zwischenkreisspannung (U_{ZK}) auf Basis der Pulsfolge durch den ersten Steuerlogikbaustein (23) bestimmt wird.

## Claims

1. Power converter (1) having a voltage link (7) for providing a link voltage (U_{ZK}) for a power unit (2), which can be driven by a control circuit (22), for converting electrical energy, which comprises:
- a first circuit arrangement (11) having a first voltage divider (13) that is connected to the voltage link (7) and has a first voltage tap (15) for tapping a first partial voltage, said voltage tap being electrically connected to an input of an analogue-to-digital converter (29) for generating a digital voltage value based on the first partial voltage, wherein the voltage link (7) is passively discharged by means of the first voltage divider (13), wherein an output of the analogue-to-digital converter (29) is connected with the interposition of a first DC-isolating transmission device (27) for transmitting the digital voltage value to the control circuit (22), wherein the control circuit (22) is configured to determine a first voltage value for the link voltage (U_{ZK}) based on the digital voltage value,
- a second circuit arrangement (12) having a second voltage divider (14) that is connected to the voltage link (7) and has a second voltage tap (16) for tapping a second partial voltage, said voltage tap being electrically connected to an input of a voltage/frequency converter (20) for generating a pulse sequence based on the second partial voltage, wherein the voltage link (7) is passively discharged by means of the second voltage divider (14), wherein an output of the voltage/frequency converter (20) is connected with the interposition of a second DC-isolating transmission device (28) for transmitting the pulse sequence to the control circuit (22), wherein the control circuit (22) is configured to determine a second voltage value for the link voltage (U_{ZK}) based on the transmitted pulse sequence.

2. Power converter according to Claim 1, in which the control circuit (22) comprises a first control logic module (23) for generating control signals for the power unit (2) and a second control logic module (24), which is connected to the first control logic module, for generating a fault signal in the event of a malfunction of the first control logic module (23), wherein the control circuit has safety logic, which is configured to modify the control signals based on the fault signal in such a way that conversion of electrical energy is stopped, wherein
- the first circuit arrangement (11) is connected to the first control logic module (23) and the second circuit arrangement (12) is connected to the second control logic module (24),
- the first control logic module (23) is configured to determine the first voltage value for the link voltage (U_{ZK}) based on the digital voltage value,
- the second control logic module (24) is configured to determine the second voltage value for the link voltage (U_{ZK}) based on the pulse sequence and to send said second voltage value to the first control logic module (23).

3. Power converter according to Claim 1 or 2, in which the control circuit (22) comprises a first control logic module (23) for generating control signals for the power unit (2) and a second control logic module (24), which is connected to the first control logic module, for generating a fault signal in the event of a malfunction of the first control logic module (23), wherein the control circuit has safety logic, which is configured to modify the control signals based on the fault signal in such a way that conversion of electrical energy is stopped, wherein
- the first circuit arrangement (11) is connected to the first control logic module (23) and the second circuit arrangement (12) is connected to the second control logic module (24),
- the first control logic module (23) is configured to determine the first voltage value for the link voltage (U_{ZK}) based on the digital voltage value,
- the second control logic module (24) is configured to determine the second voltage value for the link voltage (U_{ZK}) based on the pulse sequence, to compare said second voltage value with the first voltage value for the link voltage (U_{ZK}) and to generate a fault signal if there is a predefinable difference between the first and second voltage value.

4. Power converter according to either of Claims 2 and 3, in which the second circuit arrangement (12) is connected to the first control logic module (23) and the first control logic module (23) is configured to determine the second voltage value for the link voltage (U_{ZK}) based on the transmitted pulse sequence.

5. Electric machine having a power converter (1) according to one of Claims 1 to 4 for feeding an operating voltage.

6. Motor vehicle having an electric or a hybrid drive, said motor vehicle being equipped with an electric machine having a power converter according to Claim 5 as a drive machine.

7. Method for operating a power converter (1) having a voltage link (7) for providing a link voltage (U_{ZK}) for a power unit (2), which can be driven by a control circuit (22), for converting electrical energy, having the following steps:
- a first partial voltage is tapped from the link voltage (U_{ZK}) by means of a first voltage divider (13) that is connected to the voltage link (7) and has a first voltage tap (15) for tapping the first partial voltage and the first partial voltage is converted to a digital voltage value, wherein the voltage link (7) is passively discharged by means of the first voltage divider (13),
- the digital voltage value is transmitted to the control circuit (22) with the interposition of a first DC-isolating transmission device (27),
- a first voltage value for the link voltage (U_{ZK}) is determined based on the digital voltage value,
- a second partial voltage is tapped from the link voltage (U_{ZK}) by means of a second voltage divider (14) that is connected to the voltage link (7) and has a second voltage tap (16) for tapping the second partial voltage and the second partial voltage is converted to a pulse sequence, wherein the voltage link (7) is passively discharged by means of the second voltage divider (14),
- the pulse sequence is transmitted to the control circuit (22) with the interposition of a second DC-isolating transmission device (28),
- a second voltage value for the link voltage (U_{ZK}) is determined based on the pulse sequence by the control circuit (22).

8. Method according to Claim 7, having the following steps:
- the digital voltage value is transmitted to a first control logic module (23) for generating control signals for the power unit (2) and the first voltage value for the link voltage (U_{ZK}) is determined based on the digital voltage value by the first control logic module (23),
- the pulse sequence is transmitted to a second control logic module (24), which is connected to the first control logic module (23), for generating a fault signal in the event of a malfunction of the first control logic module (23) and the second voltage value for the link voltage (U_{ZK}) is determined based on the pulse sequence by the second control logic module (24),
- the second voltage value for the link voltage (U_{ZK}) is sent to the first control logic module (23).

9. Method according to Claim 7 or 8, having the following steps:
- the digital voltage value is transmitted to a first control logic module (23) for generating control signals for the power unit (2) and the first voltage value for the link voltage (U_{ZK}) is determined based on the digital voltage value by the first control logic module (23),
- the pulse sequence is transmitted to a second control logic module (24), which is connected to the first control logic module (23), for generating a fault signal in the event of a malfunction of the first control logic module (23) and the second voltage value for the link voltage (U_{ZK}) is determined based on the pulse sequence by the second control logic module (24),
- the second voltage value for the link voltage (U_{ZK}) is compared with the first voltage value for the link voltage (U_{ZK}) and a fault signal is generated if there is a predefinable difference between the first and second voltage value, wherein the control signals are modified based on the fault signal in such a way that conversion of electrical energy is stopped.

10. Method according to Claim 8 or 9, in which the pulse sequence is transmitted to the first control logic module (23) and the second voltage value for the link voltage (U_{ZK}) is determined based on the pulse sequence by the first control logic module (23).

## Revendications

1. Convertisseur de courant (1) avec un circuit intermédiaire de tension (7) pour la mise à disposition d'une tension de circuit intermédiaire (U_{ZK}) pour une unité de puissance (2) amorçable par un circuit de commande (22) pour transformer de l'énergie électrique, lequel comprend :
- une première configuration de circuit (11) avec un premier diviseur de tension (13) raccordé sur le circuit intermédiaire de tension (7), avec une première prise de tension (15) pour prélever une première tension partielle qui est électriquement connectée à une entrée d'un convertisseur analogique-numérique (29) pour générer une valeur de tension numérique sur la base de la première tension partielle, une décharge passive du circuit intermédiaire de tension (7) s'effectuant par l'intermédiaire du premier diviseur de tension (13), une sortie du convertisseur analogique-numérique (29) étant raccordée sur le circuit de commande (22) sous interposition d'un premier dispositif de transmission (27) galvaniquement isolant pour la transmission de la valeur de tension numérique au circuit de commande (22), le circuit de commande (22) étant conçu pour déterminer sur la base de la valeur de tension numérique une première valeur de tension pour la tension de circuit intermédiaire (U_{ZK}),
- une deuxième configuration de circuit (12), avec un deuxième diviseur de tension (14) raccordé sur le circuit intermédiaire de tension (7), avec une deuxième prise de tension (16) pour prélever une deuxième tension partielle qui est électriquement connectée à une entrée d'un convertisseur de tension/fréquence (20) pour générer une séquence d'impulsions sur la base de la deuxième tension partielle, une décharge passive du circuit intermédiaire de tension (7) s'effectuant par l'intermédiaire du deuxième diviseur de tension (14), une sortie du convertisseur de tension/fréquence (20) étant raccordée sur le circuit de commande (22), sous interposition d'un deuxième dispositif de transmission (28) galvaniquement isolant pour la transmission de la séquence d'impulsions, le circuit de commande (22) étant conçu pour déterminer, sur la base de la séquence d'impulsions transmise, une deuxième valeur de tension pour la tension de circuit intermédiaire (*U*_{ZK}).

2. Convertisseur de courant selon la revendication 1, dans lequel le circuit de commande (22) comprend un premier module de logique de commande (23) pour générer des signaux de commande pour l'unité de puissance (2) et un deuxième module de logique de commande (24) connecté au premier module de logique de commande pour générer un signal d'erreur lors d'un dysfonctionnement du premier module de logique de commande (23), le circuit de commande comportant une logique de sécurité, laquelle est conçue pour modifier les signaux de commande sur la base du signal d'erreur, de sorte à stopper une conversion d'énergie électrique,
- la première configuration de circuit (11) étant connectée au premier module de logique de commande (23) et la deuxième configuration de circuit (12) étant connectée au deuxième module de logique de commande (24),
- le premier module de logique de commande (23) étant conçu pour déterminer, sur la base de la valeur de tension numérique, la première valeur de tension pour la tension de circuit intermédiaire (U_{ZK}),
- le deuxième module de logique de commande (24) étant conçu pour déterminer, sur la base de la séquence d'impulsions, la deuxième valeur de tension pour la tension de circuit intermédiaire (U_{ZK}) et pour la transmettre au premier module de logique de commande (23).

3. Convertisseur de courant selon la revendication 1 ou 2, sur lequel le circuit de commande (22) comporte un premier module de logique de commande (23) pour générer des signaux de commande pour l'unité de puissance (2) et un deuxième module de logique de commande (24) connecté au premier module de logique de commande pour générer un signal d'erreur lors d'un dysfonctionnement du premier module de logique de commande (23), le circuit de commande comportant une logique de sécurité, laquelle est conçue pour modifier les signaux de commande sur la base du signal d'erreur, de sorte à stopper une conversion d'énergie électrique,
- la première configuration de circuit (11) étant connectée au premier module de logique de commande (23) et la deuxième configuration de circuit (12) étant connectée au deuxième module de logique de commande (24),
- le premier module de logique de commande (23) étant conçu pour déterminer, sur la base de la valeur de tension numérique, la première valeur de tension pour la tension de circuit intermédiaire (U_{ZK}),
- le deuxième module de logique de commande (24) étant conçu pour déterminer, sur la base de la séquence d'impulsions, la deuxième valeur de tension pour la tension de circuit intermédiaire (U_{ZK}), pour l'ajuster avec la première valeur de tension pour la tension de circuit intermédiaire (U_{ZK}) et pour générer un signal d'erreur en présence d'une différence prédéfinissable entre la première et la deuxième valeur de tension.

4. Convertisseur de courant selon l'une quelconque des revendications 2 ou 3, dans lequel la deuxième configuration de circuit (12) est connectée sur le premier module de logique de commande (23) et le premier module de logique de commande (23) est conçu pour déterminer, sur la base de la séquence d'impulsions transmise, la deuxième valeur de tension pour la tension de circuit intermédiaire (U_{ZK}) .

5. Machine électrique avec un convertisseur de courant (1) selon l'une quelconque des revendications 1 à 4 pour l'alimentation avec une tension de service.

6. Véhicule automobile, avec une motorisation électrique ou hybride, qui est équipé avec une machine électrique avec un convertisseur de courant selon la revendication 5, en tant que moteur d'entraînement.

7. Procédé destiné à faire fonctionner un convertisseur de courant (1) avec un circuit intermédiaire de tension (7) pour la mise à disposition d'une tension de circuit intermédiaire (U_{ZK}) pour une unité de puissance (2) amorçable par un circuit de commande (22) pour transformer de l'énergie électrique, avec les étapes suivantes :
- prélèvement d'une première tension partielle sur la tension de circuit intermédiaire (U_{ZK}) au moyen d'un premier diviseur de tension (13) raccordé sur le circuit intermédiaire de tension (7) qui comporte une première prise de tension (15) pour prélever la première tension partielle et pour convertir la première tension partielle en une valeur de tension numérique, une décharge passive du circuit intermédiaire de tension (7) s'effectuant par l'intermédiaire du premier diviseur de tension (13),
- transmission de la valeur de tension numérique au circuit de commande (22), sous interposition d'un premier dispositif de transmission (27) galvaniquement isolant,
- détermination d'une première valeur de tension pour la tension de circuit intermédiaire (U_{ZK}) sur la base de la valeur de tension numérique,
- prélèvement d'une deuxième tension partielle sur la tension de circuit intermédiaire (U_{ZK}) au moyen d'un deuxième diviseur de tension (14) raccordé sur le circuit intermédiaire de tension (7), qui comporte une deuxième prise de tension (16) pour prélever la deuxième tension partielle et pour convertir la deuxième tension partielle en une séquence d'impulsions, une décharge passive du circuit intermédiaire de tension (7) s'effectuant par l'intermédiaire du deuxième diviseur de tension (14),
- transmission de la séquence d'impulsions au circuit de commande (22), sous interposition d'un deuxième dispositif de transmission (28) galvaniquement isolant,
- détermination d'une deuxième valeur de tension pour la tension de circuit intermédiaire (U_{ZK}) sur la base de la séquence d'impulsions, par le circuit de commande (22).

8. Procédé selon la revendication 7, avec les étapes suivantes :
- transmission de la valeur de tension numérique à un premier module de logique de commande (23) pour générer des signaux de commande pour l'unité de puissance (2) et de la détermination de la première valeur de tension pour la tension de circuit intermédiaire (U_{ZK}) sur la base de la valeur de tension numérique par le premier module de logique de commande (23),
- transmission de la séquence d'impulsions à un deuxième module de logique de commande (24) connecté au premier module de logique de commande (23), pour générer un signal d'erreur lors d'un dysfonctionnement du premier module de logique de commande (23) et détermination de la deuxième valeur de tension pour la tension de circuit intermédiaire (U_{ZK}) sur la base de la séquence d'impulsions par le deuxième module de logique de commande (24),
- transmission de la deuxième valeur de tension pour la tension de circuit intermédiaire (U_{ZK}) au premier module de logique de commande (23).

9. Procédé selon la revendication 7 ou 8, avec les étapes suivantes :
- transmission de la valeur de tension numérique à un premier module de logique de commande (23), pour générer des signaux de commande pour l'unité de puissance (2) et détermination de la première valeur de tension pour la tension de circuit intermédiaire (U_{ZK}) sur la base de la valeur de tension numérique par le premier module de logique de commande (23),
- transmission de la séquence d'impulsions à un deuxième module de logique de commande (24) connecté au premier module de logique de commande (23), pour générer un signal d'erreur lors d'un dysfonctionnement du premier module de logique de commande (23) et détermination de la deuxième valeur de tension pour la tension de circuit intermédiaire (U_{ZK}) sur la base de la séquence d'impulsions par le deuxième module de logique de commande (24),
- ajustage de la deuxième valeur de tension pour la tension de circuit intermédiaire (U_{ZK}) avec la première valeur de tension pour la tension de circuit intermédiaire (U_{ZK}) et génération d'un signal d'erreur, en présence d'une différence prédéfinissable entre la première et la deuxième valeur de tension, les signaux de commande étant modifiés sur la base du signal d'erreur de sorte à stopper une conversion d'énergie électrique.

10. Procédé selon la revendication 8 ou 9, lors duquel la séquence d'impulsions est transmise au premier module de logique de commande (23) et la deuxième valeur de tension pour la tension de circuit intermédiaire (U_{ZK}) est déterminée sur la base de la séquence d'impulsions par le premier module de logique de commande (23).
